Europäisches Patentamt

European Patent Office

Office européen des brevets

(11) Veröffentlichungsnummer: **0 087 504**
**B1**

(12) # EUROPÄISCHE PATENTSCHRIFT

(45) Veröffentlichungstag der Patentschrift:
12.10.88

(21) Anmeldenummer: 82110260.5

(22) Anmeldetag: 06.11.82

(51) Int. Cl.⁴: **B 62 D 33/00**, B 62 D 63/08

(54) Anhänger für Kraftfahrzeuge.

(43) Veröffentlichungstag der Anmeldung:
07.09.83 Patentblatt 83/36

(45) Bekanntmachung des Hinweises auf die Patenterteilung:
12.10.88 Patentblatt 88/41

(84) Benannte Vertragsstaaten:
BE DE FR NL

(56) Entgegenhaltungen:
DE-C-902 212
DE-U-7 126 992
DE-U-8 211 026

(73) Patentinhaber: Westfalia- Werke Franz Knöbel & Söhne KG, Am Sandberg 45, D-4840 Rheda- Wiedenbrück (DE)

(72) Erfinder: Braun, Dieter, Robert- Schumann- Strasse 6, D-4840 Rheda- Wiedenbrück (DE)
Erfinder: Koglin, Klaus, Flurstrasse 16, D-4410 Warendorf (DE)

(74) Vertreter: Meldau, Gustav, Dipl.- Ing., Patentanwälte Dipl.- Ing. Gustav Meldau Dipl.- Phys. Dr. H.- J. Strauss Postfach 2452 Vennstrasse 9, D-4830 Gütersloh 1 (DE)

EP 0 087 504 B1

## Beschreibung

Die Neuerung bezieht sich auf einen ein- oder tandemachsigen Anhänger für Kraftfahrzeuge, mit einem Aufbau aus einer Plattform, die von Seitenwänden begrenzt ist die aus mit Metall-Profil-Rahmen umgebenen Platten bestehen.

Insbesondere bei Anhängern von Kraftfahrzeugen, die zum Transport von Lasten verwendet werden, wurde bisher der Aufbau vielfach derart ausgebildet, daß die dafür verwendeten Platten mit einem U-förmigen Profil oder auch nur einem Winkelprofil aus Metall umgeben wurden. Dieses Profil hatte im wesentlichen die Aufgabe den Schutz der Plattenkanten zu übernehmen - es leistete keinen wesentlichen Beitrag zur Festigkeit des gesamten Aufbaues. Aus diesem Grunde wurden auch die Verbindungen der einzelnen Platten miteinander, beispielsweise die Eckverbindungen zwischen Seiten und Hinterwand, oder auch die Eckverbindung zwischen Boden und Seitenwänden derart ausgeführt, daß dafür gesonderte Beschläge verwendet wurden, die im wesentlichen mit den die eigentlichen Wände bildenden Platten verbunden waren und nur in wenigen Fällen zusätzliche Verbindungen mit den, die Platten umgebenden Profilen aufwiesen. Dadurch ergab sich insgesamt eine besondere Bauart, die von der Konstruktion und der Montage besondere Anforderungen stellte und insgesamt verhältnismäßig umständlich und auch schwer war. Nicht nur das Gewicht des Anhängers wurde dadurch zu Ungunsten der Nutzlast erhöht, sondern es waren auch die Kosten für Herstellung und Reparaturen wesentlich höher. Die meisten Verbindungen bei dieser Bauart, insbesondere so weit es sich um Verbindungen in den Plattenflächen handelte - und das waren auch diejenigen Verbindungen, die mit besonderen Beschlägen die einzelnen Teile des Aufbaues, also beispielsweise die Seitenwände am Boden befestigten, sind mit Schrauben hergestell. Schraubenköpfe und insbesondere auch Schraubenmuttern sowie die daraus hervorstehenden Schäfte der Schrauben unterbrechen die glattwandigen Flächen und bilden insbesondere Hindernisse hinsichtlich der mit Fahrzeugen verbundenen Unfallgefahren. Auch war bei der bisherigen Konstruktion, wenn die einzelnen Platten mit Metallrahmen umgeben waren, die Verbindung der einzelnen Platten über Eck mit Schwierigkeiten verbunden, denn es mußte jeweils bei den besonderen Verbindungsbeschlägen, wie beispielsweise Winkeleisen und dergleichen das andere Stärkenmaß im Bereich der Randumrahmung der Platten berücksichtigt werden. Auskröpfungen in den Verbindungsbeschlägen waren daher erforderlich oder ähnliche Anpassungen der Formgebung.

Es sind auch schon ein- oder tandemachsige Anhänger für Kraftfahrzeuge bekannt, mit einem Aufbau aus einer Plattform, die von Seitenwänden begrenzt ist, die aus mit Metallprofilrahmen umgebenen Platten bestehen, wobei das Profil der Rahmen zueinander parallele Schenkel aufweist, zur Auflage auf der Außen- und Innenfläche der Platten und die Profilschenkel mit Anformungen versehen sind, die in Ausformungen der Platten formschlüssig eingreifen, sowie eine die Schenkel verbindende Basis, wobei Einschweißmuttern von der Profilinnenseite her auf die Basis des Profils aufgesetzt sind, und wobei diesen Einschweißmuttern Durchgangslöcher im Profil zugeordnet sind (DE-GM-8 132 786).

Die Erfindung hat sich die Aufgabe gestellt die vorbekannten Aufbauten, die aus mit Metall-Profil-Rahmen umgebenen Platten bestehen, weiter zu entwickeln und zu verbessern und die nach dem allgemeinen Stand der Technik vorhandenen Nachteile bei Anhängern und ihren Aufbauten zu vermeiden und einen Aufbau zu schaffen, bei dem die einzelnen Elemente von Boden, Seitenwänden und dergleichen, die als Platten ausgebildet sind, fest mit ihrem umgebenden Metallprofilrahmen verbunden sind und untereinander ohne Zuhilfenahme besonderer zusätzlicher Beschläge, insbesondere mit Hilfe von Schraubverbindungen zu verbinden sind, wobei diese Schraubverbindungen "entschärft" sind, d.h. daß sie derart angeordnet sind, daß sie möglichst unsichtbar sind oder zumindest doch wenig über ihre Umgebung hinausragen.

Zur Lösung dieser Aufgabe ist ein ein- oder tandemachsiger Anhänger der vorbekannten Art dadurch gekennzeichnet, daß der Plattenrand im Bereich der Einschweißmuttern in Abstand von der Basis der umgebenden Metall-Profil-Rahmen angeordnet ist und die Anformungen an den Profilschenkeln mit Abstand von deren Randbegrenzung angeordnet sind. Dabei sind die Anformungen an zumindest einem Schenkel des Rahmen-U-Profils auf seiner Fläche in Form einer Einsenkung oder Eindrückung ausgebildet, die in das Material der Platte eindringt und damit die Ausformung der Platte bildet. Die Anformung kann auch derart ausgebildet sein, daß sie an zumindest einem Schenkel des Rahmen-U-Profils auf seiner Fläche in Form einer eingesenkten, durchgehenden Sicke ausgebildet ist und die Ausformung der Platte in Form einer, in das Material der Platte eingebrachten Nut ausgebildet ist, in die die Sicke eindringt.

Durch diese Verbindung der Rahmenprofile mit den Platten bzw. Plattenkanten und der Platten untereinander wird eine erhebliche Verbesserung der Verbindung der Rahmenprofile mit den Platten erreicht, die die formschlüssige Verbindung der Rahmenprofile mit den Platten bzw. Plattenrändern derart ausbilden, daß praktisch die Rahmenprofile mit den Platten eine Einheit bilden, die auch im Hinblick auf die Festigkeit und Statik erlaubt wesentlich höhere Werte einzusetzen, als wenn die Platten des Aufbaus lediglich für sich in die Festigkeitsberechnung einzubeziehen sind. Weiterhin wird der Vorteil erreicht, daß die außerhalb der Platten bzw. Profile befindlichen Schraubenköpfe derart abgedeckt sind, daß eine Verletzungs- und Unfallmöglichkeit praktisch ausgeschlossen oder zumindest fast vollständig verhindert ist. Im übrigen sind dadurch die Schrauben auch wesentlich besser geschützt, so daß im rauhen Betrieb eine Beschädigung der Schrauben zumindest weitgehend verhindert ist.

Dadurch, daß einer der Schenkel des U-Profils des Rahmens an seinem Ende rechtwinklig nach außen abgebogen ist und einen Schenkelflansch bildet, der vorzugsweise die gleiche Länge wie der Schenkel des damit zu verbindenden Profils hat, wird eine wesentliche Erhöhung der Festigkeit der Eckverbindungen zwischen einzelnen Wandteilen bzw. zwischen den Wandteilen und der Bodenplatte erreicht. Damit ist auch eine Verbesserung der Dichtigkeit der Verbindung in den Eckverbindungen gegeben.

Die Erfindung wird nachstehend anhand von Ausführungsbeispielen mit Bezug auf die Zeichnungen näher erläutert. In den Zeichnungen zeigen:

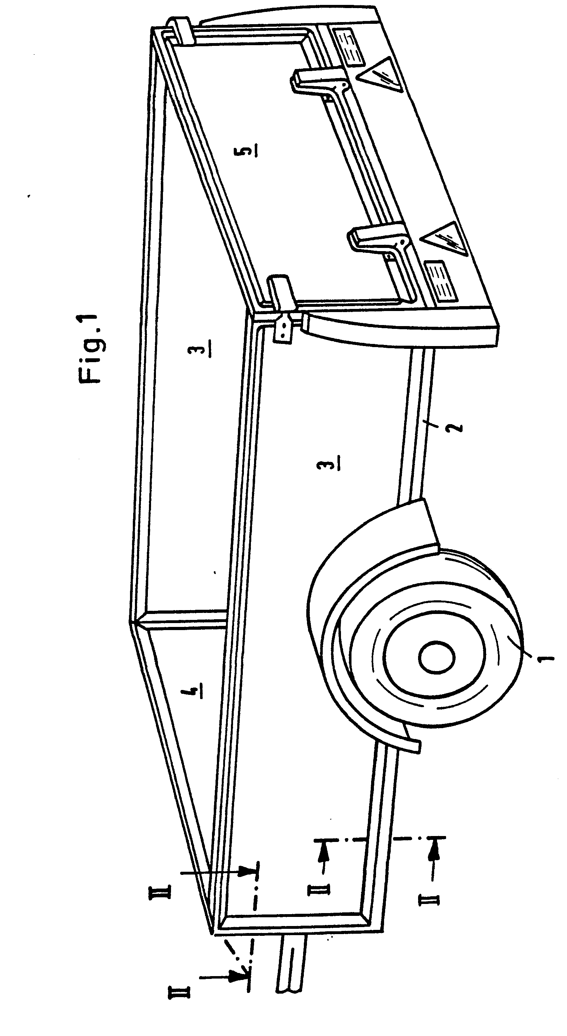

Fig. 1   die perspektivische Ansicht eines einachsigen Anhänger für Kraftfahrzeuge,

Fig. 2   einen Schnitt durch eine Eckverbindung, beispielsweise zwischen Boden und Seitenwand, entlang der Linien II-II der Fig. 1.

Ein Fahrzeuganhänger nach der Neuerung besteht aus dem Fahrgestell mit den Rädern 1 sowie einer Plattform oder Bodenplatte 2, den Seitenwänden 3, der Vorderwand 4 sowie der Rückwand 5. Die einzelnen Wände bestehen aus Holz, Holzmaterial oder auch aus einem anderen Material, sie sind von Metallprofilen allseits umgeben.

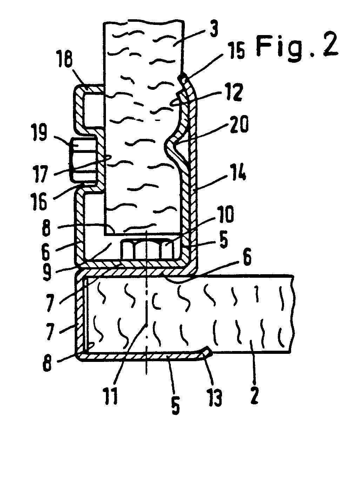

Nach dem Ausführungsbeispiel entsprechend der Fig. 2 sind die Platten der Seitenwände 3 und des Bodens 2 bzw. der Frontwand 4 von U-Profilförmigen Metallprofilen umgeben. Sowohl um die Außenkante der Seitenwandplatte 3, als auch um die Außenkante der Bodenplatte 2 bzw. Seitenwandplatte 4, die die Frontseite des Aufbaus bildet, ist ein aus abgewinkeltem Blech oder tiefgezogenem Blech gebildetes U-Profil angeordnet. Das Profil selbst besteht aus den beiden Schenkeln 5 und 6, die mit der Basis 7 miteinander verbunden sind. Die Basis 7 liegt quer vor dem Plattenrand. Bei mindestens einer der beiden, eine Wandseite bildenden Platten, im vorliegenden Fall bei der die Seitenwand 3 bildenden Platte, ist zwischen der Basis 7 und dem eigentlichen Plattenrand 8 ein Zwischenraum 9 vorgesehen. In diesem Zwischenraum sind in Abständen von der Innenseite her auf die Basis 7 des U-Profils Schweißmuttern 10 aufgesetzt. Jeweils jeder Schweißmutter ist ein Durchgangsloch in der Basis 7 des U-Profils zugeordnet. Entsprechende Durchgangslöcher sind in dem darunter erkennbaren Profil und der Platte 4 (bzw. Platte 2) der Frontwand angeordnet. Diese sind angedeutet durch die unterbrochene Linie 11. Zur Verbindung wird von außen her eine Schraube in diese Löcher 11 eingeführt und mit der Schweißmutter 10, die in dem oberen U-Profil festsitzt, fest verschraubt.

Um die Profile 5, 6, 7 fest mit den Platten 3 bzw. 4 zu verbinden, können sie mittels Nieten verbunden sein, die im Bereich der Plattenränder quer durch die Platten und durch die beiden Schenkel 5 und 6 hindurchgeführt sind. Vorteilhaft sind die U-Profile an den Enden 12 und 13 der Schenkel nach innen derart abgebogen, daß der eine Rand der freien Kante in das Material der Platte 3 oder 4 eindringt. Es wird dadurch eine formschlüssige Verbindung zwischen dem, den Rand umgebenden U-Profil hergestellt und weiterhin der Vorteil erreicht, daß die Profile einen sanften Übergang gegenüber den Außenflächen der Platten bilden, so daß auch dadurch Unfallgefahren und Schmutzablagerungen vermieden werden.

Die Zwischenräume 9 zwischen dem Plattenrand 8 und der Basis 7 der die Platten umgebenden U-Profile, in denen die Schweißmuttern 10 untergebracht sind, können derart ausgebildet sein, daß in Abständen an den Plattenrändern Einfräsungen vorgesehen werden, so daß lediglich an den Stellen, an denen in dem U-Profil Schweißmuttern 10 angeordnet sind, Einnehmungen der Platten 3 bzw. 4 vorhanden sind. Der Zwischenraum kann auch derart ausgebildet sein, daß die Platte 3 eine gerade, durchgehende Randkante 18 aufweist und im Abstand von der Basis 7 in dem U-Profil festsitzt, wobei dieser Abstand den Zwischenraum 9 darstellt, in dem die Schweißmuttern 10 angeordnet sind.

Die Schenkel 5 und 6 des U-Profils an der oberen Platte 3 sind verlängert und besonders ausgebildet. Der äußere Schenkel 6 ist mit einer längs durchgehenden Sicke 16 versehen, die mit der Innenfläche ihres Bodens 17 fest-pressend gegen die Außenfläche der Platte 3 anliegt. Es ist damit eine kraftschlüssige Verbindung hergestellt. Es kann auch in der Außenfläche der Platte 3 eine entsprechende Nut vorgesehen sein, so daß die Sicke 16 formschlüssig in diese Nut eingreift, so daß zwischen dem Metallprofil des Rahmens und der Platte 3 eine formschlüssige Verbindung hergestellt ist. An seinem freien oberen Rand ist der Schenkel 6 mit einer Abwinklung 18 gegen die Oberfläche der Platte 3 geführt.

In der Sicke 16, die in den Schenkel 6 des Metallprofils eingedrückt ist, können Muttern bzw. Schraubenköpfe 19 von Verbindungsmitteln angeordnet sein, mit denen beispielsweise Beschläge an der Platte 3 der Seitenwand befestigt sind, es ist erkennbar, daß diese Muttern 19 in der Sicke völlig oder zumindest so weit versenkt sind, daß Unfallgefahren sehr weitgehend vermindert sind.

Anstelle einer Sicke 16 können in einem oder beiden Schenkeln 5 bzw. 6 des U-Profils des Rahmens um eine Platte punktförmige Einsenkungen oder Eindrückungen 20 vorgesehen sein. Hierfür können in der Platte 3 entsprechende Löcher zur Vornahme dieser Einsenkungen vorbereitet sein, die Einsenkungen können auch derart ausgebildet sein, daß sie in das Material der Platte eindringen. Auch dadurch wird eine formschlüssige Verbindung zwischen dem Rahmenprofil und der Platte erreicht. Selbstverständlich ist es möglich, wie in Fig. 4 dargestellt, Sicke 16 und Eindrückung 20 an einander gegenüberliegenden Schenkeln 5 und 6 der U-Profile anzuordnen. Es können jedoch auch von beiden Seiten her Sicken 16 angeordnet sein, oder Eindrückungen 20. Unter bestimmten Umständen wird es sogar möglich sein, nur von einer Seite her an einem der Schenkel 5 oder 6 eine Sicke 16 bzw. Eindrückungen 20 anzuordnen.

Bei dem in Fig. 2 dargestellten Ausführungsbeispiel ist das Rahmenprofil an der Bodenkante 2 (oder Frontplatte 4) im wesentlichen in gleicher Weise ausgebildet wie die Grundform des Rahmenprofils an der Platte 3, die weiter oben erläutert ist. Es ist ein Schenkelflansch 14 vorhanden, der eine Fortsetzung des Schenkels 6 bildet, die im rechten Winkel abgewinkelt ist und den inneren Schenkel 5 der aufstehenden Wand übergreift und vorzugsweise am oberen Ende mit einer Abbiegung 15 in das Material der Platte 3 eindringt.

**Patentansprüche**

1. Ein- oder tandemachsiger Anhänger für Kraftfahrzeuge mit einem Aufbau aus einer Plattform, die von Seitenwänden begrenzt ist, die aus mit Metall-Profilrahmen umgebenen Platten bestehen, wobei das Profil der Rahmen (2) zueinander parallele Schenkel (5 und 6) aufweist zur Auflage auf der Außen- und Innenfläche der Platten (2, 3 oder 4) und die Profilschenkel mit Anformungen (16 oder 20) versehen sind, die in Ausformungen der Platten formschlüssig eingreifen, sowie eine die Schenkel (5 und 6) verbindende Basis (7), wobei Einschweißmuttern (10) von der Profilinnenseite her auf die Basis (7) des Profils aufgesetzt sind, und wobei diesen Einschweißmuttern (10) Durchgangslöcher (11) im Profil zugeordnet sind, <u>dadurch gekennzeichnet</u>, daß der Plattenrand (8) im Bereich der Einschweißmuttern (10) in Abstand von der Basis (7) der umgebenden Metallprofilrahmen angeordnet ist und die Anformungen an den Profilschenkeln (5 und 6) mit Abstand von deren Randbegrenzung angeordnet sind.

2. Anhänger nach Anspruch 1, <u>dadurch gekennzeichnet</u>, daß die Anformungen (16 oder 20) an zumindest einem Schenkel des Rahmen-U-Profils auf seiner Fläche in Form einer Einsenkung oder Eindrückung (16 bzw. 20) ausgebildet ist, die in das Material der Platte (2 bzw. 3 oder 4) eindringt und damit die Ausformung der Platte bildet.

3. Anhänger nach Anspruch 1 oder 2, <u>dadurch gekennzeichnet</u>, daß die Anformung (16 oder 20) an zumindest einem Schenkel des Rahmen-U-Profils auf seiner Fläche in Form einer eingesenkten, durchgehenden Sicke (16) ausgebildet ist und die Ausformung der Platte in Form einer in das Material der Platte (2 bzw. 3 oder 4) eingebrachten Nut ausgebildet ist, in die die Sicke (16) eindringt.

4. Anhänger nach Anspruch 1 und einem oder mehreren der folgenden Ansprüche, <u>dadurch gekennzeichnet</u>, daß Schrauben für die Verbindung von Platten miteinander oder für die Anbringung von Beschlägen mit ihren Köpfen in den Anformungen (16 oder 20) der Rahmenprofile angeordnet sind.

5. Anhänger nach Anspruch 1 und einem oder mehreren der folgenden Ansprüche, <u>dadurch gekennzeichnet</u>, daß einer der Schenkel des U-Profils des Rahmens an seinem Ende rechtwinklig nach außen abgebogen ist und einen Schenkelflansch (14) bildet, der vorzugsweise die gleiche Länge wie der Schenkel (5 oder 6) hat.

**Claims**

1. Single-axle or twin-axle trailer for motor vehicles with a body consisting of a platform, which is limited by side walls consisting of panels surrounded by sectional metal frames, the section of the frame (2) comprising sides (5 and 6) parallel to each other for resting against the outer surface and inner surface of the panels (2, 3 or 4) and the sides of the section being provided with shaped portions (16 or 20), which engage positively in deformations of the panels as well as a base (7) connecting the sides (5 and 6), weld-in nuts (10) being fitted from the inside of the section to the base (7) of the section and through holes (11) in the section being associated with these weld-in nuts (10), characterised in that the edge of the panel (8) is located in the region of the weld-in nuts (10) at a distance from the base (7) of the surrounding sectional metal frame and the shaped portions on the sides of the section (5 and 6) are located at a distance from its boundary edge.

2. Trailer according to claim 1, characterised in that the shaped portions (16 or 20) on at least one side of the U-shaped sectional frame are constructed on its surface in the form of a recess or depression (16 or 20), which penetrates in the material of the panel (2 or 3 or 4) and thus forms the deformation of the panel.

3. Trailer according to claim 1 or 2, characterised in that the shaped portions (16 or 20) on at least one side of the U-shaped sectional frame is constructed on its surface in the form of a countersunk, continuous bead (16) and the deformation of the panel is constructed in the form of a groove introduced into the material of the panel (2 or 3 or 4), into which the bead (16) penetrates.

4. Trailer according to claim 1 and one or more of the following claims, characterised in that screws for the connection of panels to each other or for the attachment of fittings are located with their heads in the shaped portions (16 or 20) of the sectional frames.

5. Trailer according to claim 1 and one or more of the following claims, characterised in that one of the sides of the U-section of the frame is bent outwards at right angles at its end and forms a side flange (14), which preferably is the same length as the side (5 or 6).

## Revendications

1. Remorque à essieu simple ou tandem pour véhicules à moteur, munie d'une caisse constituée d'une plate-forme délimitée par des parois latérales, qui consistent en des panneaux entourés par des cadres métalliques profilés, le profil des cadres (2) présentant des branches (5 et 6) mutuellement parallèles destinées à reposer sur les faces externe et interne des panneaux (2, 3 ou 4), et les branches du profil étant dotées de déformations (16 ou 20) qui pénètrent par concordance de formes dans des déformations des panneaux, ainsi qu'une base (7) reliant lesdites branches (5 et 6), des écrous (10) incorporés par soudage étant placés sur la base (7) du profil à partir de la face interne de ce profil, et des trous traversants (11), pratiqués dans ledit profil, étant associés à ces écrous (10) incorporés par soudage, caractérisée par le fait que le bord (8) des panneaux est disposé, au voisinage des écrous (10) incorporés par soudage, à distance de la base (7) des cadres périphériques en profiles métalliques, et les déformations ménagées sur les branches (5 et 6) des profils sont disposées à distance de la délimitation marginale de ces branches.

2. Remorque selon la revendication 1, caractérisée par le fait que la déformation (16 ou 20) est ménagée sur la surface d'au moins une branche du profil en U du cadre, sous la forme d'un emboutissage rentrant ou d'un repoussage rentrant (16, respectivement 20) qui pénètre dans le matériau du panneau (2, respectivement 3 ou 4) et forme, de la sorte, la déformation de ce panneau.

3. Remorque selon la revendication 1 ou 2, caractérisée par le fait que la déformation (16 ou 20) est ménagée sur la surface d'au moins une branche du profil en U du cadre, sous la forme d'une moulure encaissée ininterrompue (16), et la déformation du panneau est réalisée sous la forme d'une gorge qui est façonnée dans le matériau de ce panneau (2, respectivement 3 ou 4), et dans laquelle la moulure (16) s'engage.

4. Remorque selon la revendication 1 et l'une ou plusieurs des revendications suivantes, caractérisée par le fait que des boulons, destinés à la solidarisation mutuelle de panneaux ou à la mise en place de ferrures, sont logés par leurs têtes dans les déformations (16 ou 20) des profils des cadres.

5. Remorque selon la revendication 1 et l'une ou plusieurs des revendications suivantes, caractérisée par le fait que l'une des branches du profil en U du cadre est coudée à angle droit vers l'extérieur, à son extrémité, et forme une aile (14) présentant, de préférence, la même longueur que la branche (5 ou 6).

Fig.1

0 087 504

Fig. 2